# EUROPÄISCHE PATENTSCHRIFT

(11) **EP 2 460 760 B1**
(45) Veröffentlichungstag und Bekanntmachung des Hinweises auf die Patenterteilung: **18.06.2014**
(21) Anmeldenummer: 11009489.3
(22) Anmeldetag: 30.11.2011
(51) Int. Cl.: B66F 9/075, B66F 9/24

(54) **Montageeinheit für ein elektrisches Leistungsteil in einem Flurförderzeug**
Assembly unit for an electric power element in a forklift
Unité de montage pour un élément de puissance électrique dans un chariot de manutention

(30) Priorität: 01.12.2010 DE 102010053135
(43) Veröffentlichungstag der Anmeldung: 06.06.2012
(73) Patentinhaber: Jungheinrich Aktiengesellschaft, 22047 Hamburg (DE)
(72) Erfinder: Claussen, Hans-Peter, 24576 Bad Bramstedt (DE); Schuldt, Thomas, 22179 Hamburg (DE); Mahler, Arne, 22335 Hamburg (DE)
(74) Vertreter: Hauck Patent- und Rechtsanwälte

(56) Entgegenhaltungen:
- EP-A1- 2 208 703
- JP-A- 5 032 139
- JP-A- 9 012 289
- US-A1- 2002 189 874

## Beschreibung

Die Erfindung bezieht sich auf eine Montageeinheit für ein elektrisches Leistungsteil in einem batteriebetriebenen Flurförderzeug nach Patentanspruch 1.

Als Antriebsmotoren in Flurförderzeugen werden zumeist Wechselstrommotoren eingesetzt. Es ist daher erforderlich, den von der Batterie abgegebenen Gleichstrom in einen Wechselstrom umzuwandeln. Dies geschieht in einem elektronischen Leistungsteil, bei dem Halbleiterschalter und eine Steuerungselektronik auf einer Halbleiterplatte angebracht sind. Die Halbleiterplatte wird zusammen mit weiteren elektronischen Bauteilen, wie z.B. einer Schützsteuerung, einem Notausschalter, einer Hupe usw. an einer Montageplatte angebracht. Die Montageplatte mit den darauf bereits montierten Teilen wird an einem Haltebauteil des Flurförderzeugs befestigt. Außerdem sind Vorkehrungen getroffen, die Halbleiterelemente ausreichend zu kühlen.

Bei einem bekannten Aufbau einer derartigen Montageeinheit ist die Halbleiterplatte auf einem Grundkörper aus Aluminium angebracht, der seinerseits an der Montageplatte befestigt ist. Der Grundkörper wird von einem Gehäusedeckel aus Kunststoffmaterial abgedeckt, um das Eindringen von Staub und Feuchtigkeit zu verhindern. JP05032139 offenbart eine solche Montageeinheit.

Ein derartiger Aufbau ist jedoch verhältnismäßig aufwendig in der Serienfertigung. Der Erfindung liegt daher die Aufgabe zugrunde, eine Montageeinheit für das elektrische Leistungsteil in einem batteriebetriebenen Flurförderzeug zu schaffen, die mit einem geringeren Aufwand hergestellt werden kann.

Diese Aufgabe wird durch die Merkmale des Patentanspruchs 1 gelöst.

Bei der erfindungsgemäßen Montageeinheit ist die Halbleiterplatte unmittelbar an der Montageplatte angebracht.

Bei der erfindungsgemäßen Montageeinheit wird der bisher verwendete Grundkörper, auf dem die Halbleiterplatte angebracht ist, eingespart. Dieses Teil ist in der Serienfertigung ein vergleichsweise teureres Bauteil, für dessen Herstellung ein zusätzliches Werkzeug erforderlich ist. Mit der Erfindung werden somit Material- und Fertigungsaufwand eingespart.

Bei der Erfindung wurde erkannt, dass es ohne Weiteres möglich ist, die Halbleiterplatte unmittelbar auf der Montageplatte anzubringen. Diese Montageplatte, die üblicherweise aus Stahl gefertigt ist, ist auch wärmeleitend und kann daher die in der Hableiterplatte auftretende Wärme gut an die Umgebung ableiten.

Nach einer Ausgestaltung der Erfindung besteht die Montageplatte aus einem gut wärmeleitendem Material. Es ist daher denkbar, sie z.B. aus Aluminium herzustellen.

In einer weiteren Ausgestaltung der Erfindung ist der aus Kunststoff bestehende Gehäusedeckel über eine umlaufende Dichtung unmittelbar an der Montageplatte befestigt. Bei der Erfindung ist daher möglich, die in der Serienfertigung bereits vorhandenen Bauteile (Montageplatte, Halbleiterplatte und Gehäusedeckel) weiterzuverwenden, wobei lediglich dafür zu sorgen ist, dass über entsprechende Bohrungen in der Montageplatte eine Befestigung der Halbleiterplatte und des Gehäusedeckels ermöglicht ist. Die am Gehäusedeckelrand umlaufende Dichtung, die mit der Montageplatte zusammenwirkt, sorgt dafür, dass Feuchtigkeit und Staub nicht in das Innere eindringen können.

In einer bevorzugten Ausgestaltung ist der Gehäusedeckel mit der Montageplatte derart verbindbar, dass die Halbleiterplatte gegen die Montageplatte gepresst wird. Der Anpressdruck kann hierbei von dem Gehäusedeckel direkt auf die Halbleiterplatte ausgeübt werden und/oder von einer vorstehenden Anpresseinrichtung, die mit dem Gehäusedeckel verbunden ist. Die durch einen Anpressdruck an die Montageplatte gedrückte Halbleiterplatte erlaubt eine gute Wärmeübertragung auf die Montageplatte.

In einer weiteren bevorzugten Ausgestaltung ist der Gehäusedeckel mit der Montageplatte über Befestigungsmittel verbindbar. Die Befestigungsmittel können beispielsweise Schrauben und/oder Federbügel sein. Durch die Verwendung separater Befestigungsmittel zur Anbringung des Gehäusedeckels an der Montageplatte wird eine einfache Montage des Gehäusedeckels sicher gestellt.

In einer weiteren bevorzugten Ausgestaltung ist die Montageplatte formschlüssig mit dem Gehäusedeckel verbindbar. Eine solche formschlüssige Verbindung erleichtert die Montage und erlaubt eine gute Wärmeübertragung von der Halbleiterplatte auf die Montageplatte.

Um Unebenheiten in der Anlagefläche zwischen der Halbleiterplatte und der Montageplatte auszugleichen, kann zwischen diesen eine Wärmeleitfolie vorgesehen sein. Die Wärmeleitfolie unterstützt die Wärmeableitung und stellt zudem sicher, dass die Halbleiterplatte flächig auf der Montageplatte aufliegt.

Ein Ausführungsbeispiel der Erfindung soll nachfolgend anhand von Zeichnungen näher erläutert werden.
- Fig. 1: zeigt schematisch einen Schnitt durch die Montageeinheit nach der Erfindung.
- Fig. 2: zeigt perspektivisch eine Montageeinheit nach dem Stand der Technik.
- Fig. 3: zeigt eine Einzelheit der Montageeinheit nach Fig. 2.
- Fig. 4: zeigt schematisch einen Schnitt durch die Montageeinheit in zwei weiteren Ausgestaltungen der Erfindung.

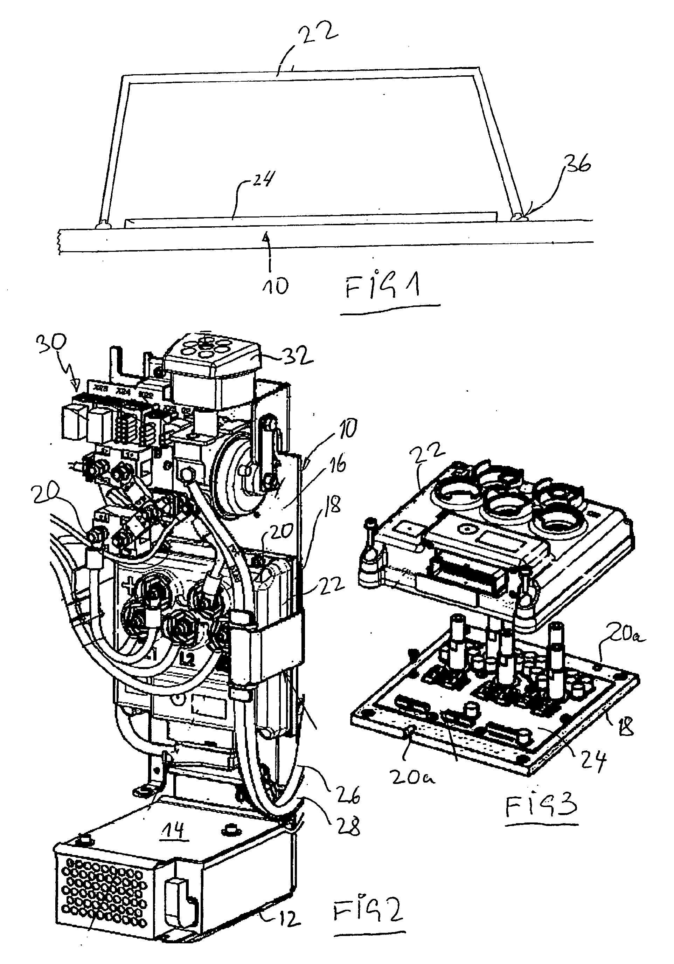

Nachfolgend sei zunächst die Montageeinheit nach dem Stand der Technik anhand der Figuren 2 und 3 beschrieben.

Eine Montageplatte 10 ist winkelförmig ausgebildet. Der untere Schenkel 12 ist unter einen Sockel 14 des nicht weiter dargestellten Flurförderzeugs befestigt. An einem aufrechten Schenkel 16 der Montageplatte 10 ist ein Grundkörper 18 aus gut wärmeleitendem Material mit Hilfe von Schrauben 20 befestigt. Der Grundkörper 18 weist hierfür entsprechende Bohrungen 20a auf. Ein Gehäusedeckel 22 aus Kunststoff überdeckt eine in Fig. 2 nicht dargestellte Halbleiterplatte auf dem Grundkörper 18. Der Gehäusedeckel 22 ist über den Grundkörper 18 ebenfalls an der Montageplatte 10 befestigt. In Fig. 3 sind Grundplatte 18 und eine darauf angebrachte Halbleiterplatte 24 zu erkennen. Außerdem ist der Gehäusedeckel 22 dargestellt. Die Halbleiterplatte 24 enthält die nicht weiter beschriebene Leistungselektronik für die im Flurförderzeug vorhandenen elektrischen Antriebe. Außerdem sind die im Einzelnen nicht bezeichneten Anschlüsse für Gleichstrom und Wechselstrom vorhanden. In Fig. 2 sind die oberen zwei Anschlüsse für Gleichstrom zu erkennen und darunter die drei Anschlüsse L1, L2 und L3 für den Wechselstrom. Die Zuführung des Gleichstroms von der nicht gezeigten Batterie des Flurförderzeugs erfolgt über die Kabel 26, 28. Sie führen zu einer ebenfalls nicht näher beschriebenen Schützeinheit 30, die ebenfalls an der Montageplatte 10 befestigt ist, wie auch ein Notausschalter 32.

In Fig. 1 ist die Montageplatte 10 im Schnitt dargestellt. Die Leistungshalbleiterplatte 24 ist unmittelbar auf die Montageplatte 10 aufgelegt und mit nicht gezeigten Mitteln daran befestigt. Der Gehäusedeckel 22 aus Kunststoff liegt mit seinem freien Rand über eine umlaufende Dichtung 36 unmittelbar an der Montageplatte 10 an und ist mit dieser verbunden. Die Verbindung des Gehäusedeckels kann über Schrauben und/oder über Federbügel erfolgen. Auf der Montageplatte 10 ist die Halbleiterplatte 24 angeordnet und steht flächig mit der Montageplatte 10 in Kontakt. Wie zu erkennen, ist gegenüber der Ausführung zum Stand der Technik ein merklich geringerer Aufwand bei der Montageeinheit nach Fig. 1 erreicht, da ein Grundkörper nicht erforderlich ist.

Es versteht sich, dass die Montageplatte 10 über gute Wärmeleiteigenschaften verfügt. Falls die Wärmeleiteigenschaften der Montageplatte 10 nicht ausreichend sind, kann es sinnvoll sein, die durch die Leistungselektronik erzeugte Wärme zu reduzieren, indem zum Beispiel eine höhere Anzahl von Leistungsschaltern verwendet wird. Auch ist es möglich eine Wärmeleitfolie zwischen der Leistungshalbleiterplatte 24 und der Montageplatte 10 vorzusehen. Mit Hilfe der Wärmeleitfolie können auch Unebenheiten zwischen der Leistungshalbleiterplatte 24 und der Montageplatte 10 ausgeglichen und die entstehende Wärme besser abgeleitet werden.

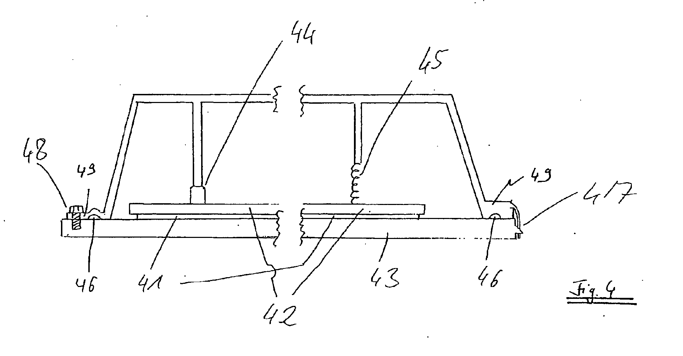

Wie in Figur 4 dargestellt, kann der Gehäusedeckel 22 Anpresseinrichtungen 44, 45 aufweisen, über die die Halbleiterplatte gegen die Montageplatte 43 gedrückt wird. Die Anpresseinrichtung 44 besteht aus einem elastischen Kunststoff. Die Anpresseinrichtung 45 ist mit einem elastischen Federelement ausgestattet. Hierbei können die Ausgestaltungen auf der linken Seite der Figur 4 mit der auf der rechten Seite kombiniert werden oder es wird eine der Anpresseinrichtungen mehrfach im Gehäusedeckel verwendet. Die Montageplatte ist zudem derart ausgeformt, dass eine formschlüssige Montage von Gehäusedeckel und/oder der Leistungshalbleiterplatte erfolgen kann (nicht dargestellt). Eine formschlüssige Verbindung des Gehäusedeckels schafft den Vorteil, dass dieser in Verbindung mit der Montageplatte eine formschlüssige Verbindung eingeht, die den Innenraum vor Umwelteinflüssen schützt. Die formschlüssige Verbindung der Leistungshalbleiterplatte erlaubt einen engen Kontakt mit der Montageplatte, um eine gute Wärmeabfuhr sicherzustellen. Der umlaufende freie Rand des Gehäusedeckels besitzt einen nach außen abgewinkelten Steg 49, der auf seiner zu Montageplatte 43 weisenden Seite eine umlaufende Vertiefung 46 zur Aufnahme einer Dichtung zeigt. In Fig. 4 ist der abgewinkelte Steg 49 auf der linken Seite zudem mit einer Bohrung zur Aufnahme einer Schraube 48 versehen. Auf der rechten Seite von Figur 4 ist der abgewinkelte Steg 49 über einen Federbügel 47 mit der Montageplatte 43 verbunden. Wiederum können die Befestigungsmittel kombiniert oder einzeln entlang dem Rand des Gehäusedeckels eingesetzt werden. Zwischen der Leiterplatte 42 und der Montageplatte 43 ist eine Wärmeleitfolie 41 vorgesehen.

## Patentansprüche

1. Montageeinheit für das elektrische Leistungsteil in einem batteriebetriebenen Flurförderzeug, mit einer an einem Haltebauteil des Flurförderzeugs anbringbaren Montageplatte (10), einer die Leistungselektronik tragenden Halbleiterplatte (24) und einem die Halbleiterplatte (24) abdeckenden Gehäusedeckel (22), **dadurch gekennzeichnet, dass** die Halbleiterplatte (24) unter Einsparung eines Grundkörpcrs unmittelbar oder über eine Wärmeleitfolie (41) an der Montageplatte (10, 43) angebracht ist.

2. Montageeinheit nach Anspruch 1, **dadurch gekennzeichnet, dass** die Montageplatte (10) aus einem gut wärmeleitenden Material besteht.

3. Montageeinheit nach Anspruch 1 oder 2, **dadurch gekennzeichnet, dass** der aus Kunststoff bestehende Gehäusedeckel (22) über eine umlaufende Dichtung (36) unmittelbar an der Montageplatte (10) anliegt.

4. Montageeinheit nach einem der Ansprüche 1 bis 3, **dadurch gekennzeichnet, dass** der Gehäusedeckel (22) mit der Montageplatte (10) derart verbindbar ist, dass der Gehäusedeckel (22) die Halbleiterplatte (24) gegen die Montageplatte (10) presst.

5. Montageeinheit nach einem der Ansprüche 1 bis 4, **dadurch gekennzeichnet, dass** der Gehäusedeckel mit der Montageplatte über Befestigungsmittel verbunden ist.

6. Montageeinheit nach Anspruch 5, **dadurch gekennzeichnet, dass** als Befestigungsmittel Schrauben (48) und /oder Federbügel (47) vorgesehen sind.

7. Montageeinheit nach Anspruch 1 bis 6, **dadurch gekennzeichnet, dass** die Montageplatte formschlüssig mit dem Gehäusedeckel verbindbar ist.

8. Montageeinheit nach Anspruch 1 bis 7, **dadurch gekennzeichnet, dass** die Montageplatte formschlüssig mit der Halbleiterplatte verbindbar ist.

## Claims

1. An installation unit for the electrical power element in a battery-operated industrial truck with an installation plate (10) attachable to a holding component of the industrial truck, a semiconductor plate (24) carrying the power electronics and a housing cover (22) covering the semiconductor plate (24), **characterized in that** the semiconductor plate (24) is attached directly or via a heat-conducting film (41) to the installation plate (10, 43) while eliminating the need for a base body.

2. The installation unit according to claim 1, **characterized in that** the installation plate (10) is made of a material that conducts heat well.

3. The installation unit according to claim 1 or 2, **characterized in that** the housing cover (22) made of plastic rests directly against the installation plate (10) via a circumferential seal (36).

4. The installation unit according to one of the claims 1 to 3, **characterized in that** the housing cover (22) is connectable with the installation plate (10) such that the housing cover (22) presses the semiconductor plate (24) against the installation plate (10).

5. The installation unit according to one of the claims 1 to 4, **characterized in that** the housing cover is connected with the installation plate via fastening means.

6. The installation unit according to claim 5, **characterized in that** screws (48) and/or spring clips (47) are provided as fastening means.

7. The installation unit according to one of the claims 1 to 6, **characterized in that** the installation plate is connectable in a form-fitting manner with the housing cover.

8. The installation unit according to one of the claims 1 to 7, **characterized in that** the installation plate is connectable in a form-fitting manner with the semiconductor plate.

## Revendications

1. Unité de montage pour le bloc d'alimentation électrique dans un chariot de manutention fonctionnant sur batterie, avec une plaque de montage (10) pouvant être mise en place sur un composant de retenue du chariot de manutention, une plaque de semi-conducteurs (24) portant l'électronique de puissance et un couvercle de boîtier (22) couvrant la plaque de semi-conducteurs (24), **caractérisée en ce que** la plaque de semi-conducteurs (24) est mise en place, en faisant l'économie d'un corps de base, sur la plaque de montage (10, 43) directement ou par le biais d'une feuille conduisant la chaleur (41).

2. Unité de montage selon la revendication 1, **caractérisé en ce que** la plaque de montage (10) est réalisée dans un matériau conduisant bien la chaleur.

3. Unité de montage selon la revendication 1 ou 2, **caractérisée en ce que** le couvercle de boîtier (22) réalisé en matière plastique est directement adjacent à la plaque de montage (10) par le biais d'un joint d'étanchéité (36) périphérique.

4. Unité de montage selon une des revendications 1 à 3, **caractérisée en ce que** le couvercle de boîtier (22) peut être raccordé à la plaque de montage (10) de telle sorte que le couvercle de boîtier (22) presse la plaque de semi-conducteurs (24) contre la plaque de montage (10).

5. Unité de montage selon une des revendications 1 à 4, **caractérisée en ce que** le couvercle de boîtier est raccordé à la plaque de montage par le biais de moyens de fixation.

6. Unité de montage selon la revendication 5, **caractérisée en ce que**, en tant que moyens de fixation, il est prévu des vis (48) et/ou des brides à ressort (47).

7. Unité de montage selon les revendications 1 à 6, **caractérisée en ce que** la plaque de montage peut être raccordée par liaison de forme au couvercle de boîtier.

8. Unité de montage selon les revendications 1 à 7, **caractérisée en ce que** la plaque de montage peut être raccordée par liaison de forme à la plaque de semi-conducteurs.
